# EUROPÄISCHE PATENTSCHRIFT

(11) **EP 2 275 247 B1**
(45) Veröffentlichungstag und Bekanntmachung des Hinweises auf die Patenterteilung: **25.12.2013**
(21) Anmeldenummer: 10186010.4
(22) Anmeldetag: 11.07.2003
(51) Int. Cl.: B29C 67/00, B22F 3/105

(54) **Vorrichtung und Verfahren zum Herstellen von dreidimensionalen Objekten mittels eines generativen Fertigungsverfahrens**
Apparatus and method for producing three dimensional objects by means of a generative production method
Appareil et méthode de production d'objets tri-dimensionels au moyen d'un procédé de fabrication génératif

(30) Priorität: 02.08.2002 DE 10235427
(43) Veröffentlichungstag der Anmeldung: 19.01.2011
(62) Teilanmeldung aus: 03784012.1
(73) Patentinhaber: EOS GmbH Electro Optical Systems, 82152 Krailling/München (DE)
(72) Erfinder: Heugel, Martin, 86899 Landsberg (DE)
(74) Vertreter: Prüfer & Partner GbR European Patent Attorneys

(56) Entgegenhaltungen:
- DE-C1- 10 108 612
- DE-U- 29 907 262
- JP-A- 4 185 425
- US-A- 5 306 447
- US-B1- 6 291 794

## Beschreibung

Die vorliegende Erfindung betrifft eine Vorrichtung und ein Verfahren zum Herstellen von dreidimensionalen Objekten nach dem Oberbegriff des Patentanspruchs 1 bzw. des Patentanspruchs 6.

Das deutsche Gebrauchsmuster DE 299 07 262 U1 offenbart eine Vorrichtung zum Herstellen eines dreidimensionalen Objektes mittels Rapid Prototyping durch aufeinanderfolgendes Verfestigen von Schichten eines mittels elektromagnetischer Strahlung oder Teilchenstrahlung verfestigbaren Aufbaumaterials an den dem jeweiligen Querschnitt des Objektes in jeder Schicht entsprechenden Stellen gemäß dem Oberbegriff des Anspruchs 1, und ein Verfahren gemäß dem Oberbegriff des Anspruchs 6.

Bei generativen Fertigungsverfahren, wie z. B. dem Selektiven Lasersintern, dem selektiven Laserschmelzen, der Stereolithographie, dem 3D-Printing , werden dreidimensionale Objekte schichtweise hergestellt, indem Schichten eines Aufbaumaterials aufgetragen und durch selektives Verfestigen an den dem Querschnitt der Objekte entsprechenden Stellen miteinander verbunden werden.

Ein derartiges Verfahren und eine derartige Vorrichtung sind beispielsweise aus der EP 0 734 842 bekannt, die das selektive Lasersintern von pulverförmigem Aufbaumaterial beschreibt. Dort wird eine erste Schicht eines pulverförmigen Materials auf einen absenkbaren Träger aufgebracht und an den dem Objekt entsprechenden Stellen mit einem Laser bestrahlt, so daß das Material dort zusammensintert. Danach wird der Träger abgesenkt und es wird auf diese erste Schicht eine zweite Schicht aufgebracht und wiederum selektiv gesintert, die dabei mit der ersten Schicht verbunden wird. Dadurch wird das Objekt schichtweise gebildet. Während des Auftragens einer neuen Schicht findet keine Bestrahlung statt. Dadurch wird der Laser als eines der kostenintensivsten Elemente der Lasersinteranlage nicht wirtschaftlich optimal genutzt und die Produktivität der Vorrichtung wird durch Bestrahlungspausen gesenkt. Hinzu kann ein Zeitverlust durch Aufheizen, Abkühlen und andere Verfahrensschritte treten.
Ferner ist es bei einer derartigen vorrichtung bekannt, mehrere Objekte parallel aufzubauen, wenn diese in den Bauraum passen.

Sollen mehr Bauteile gleichzeitig gefertigt werden, als in den Bauraum passen, so ist dies grundsätzlich durch den parallelen Betrieb mehrerer solcher Vorrichtungen möglich, allerdings ist dies mit hohen Investitionskosten verbunden.

Eine Aufgabe der vorliegenden Erfindung ist es daher, eine Vorrichtung und ein Verfahren bereitzustellen, durch die auf kostengünstige Weise die Produktivität und Wirtschaftlichkeit bei der schichtweisen, generativen Herstellung von dreidimensionalen Objekten erhöht werden kann.

Die Aufgabe wird gelöst durch eine Vorrichtung nach Anspruch 1 und ein Verfahren nach Anspruch 6.

Weiterbildungen der Erfindung sind in den Unteransprüchen gekennzeichnet.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Seitenansicht einer Vorrichtung ge- mäß einer ersten Ausführungsform der vorliegenden Er- findung;
- Fig. 2: eine schematische Darstellung einer Vorrichtung gemäß einer zweiten Ausführungsform der Erfindung;
- Fig. 3: eine schematische Darstellung einer Vorrichtung gemäß einer Abwandlung der zweiten Ausführungsform der Er- findung;
- Fig. 4: eine schematische Darstellung eines Verfahrensablaufs gemäß einer zweiten Ausführungsform der Erfindung; und

### Erste Ausführungsform

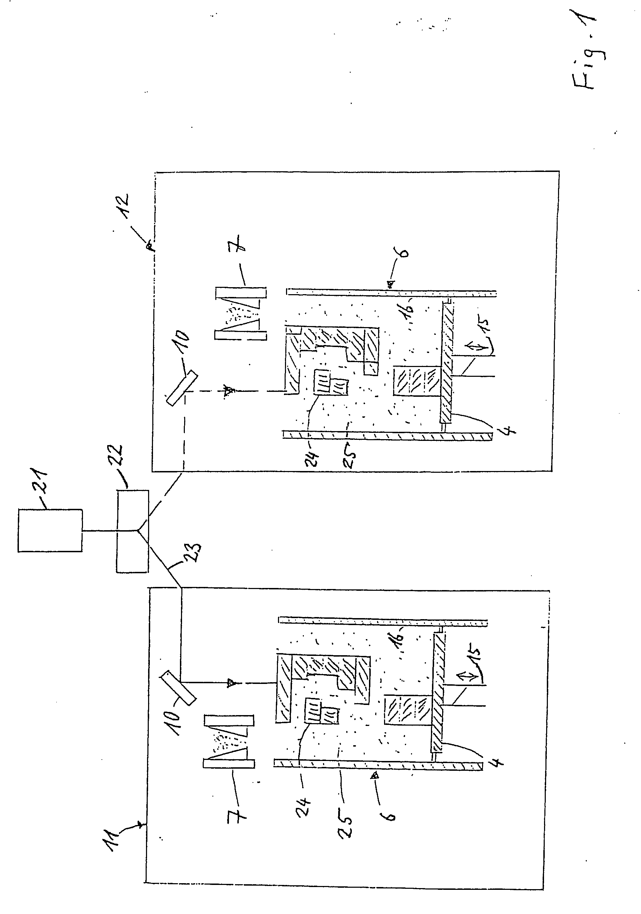

Fig. 1 zeigt eine Querschnittsansicht einer Lasersinteranlage als Beispiel einer Vorrichtung zur schichtweisen Herstellung von dreidimensionalen Objekten aus einem mittels elektromagnetischer Strahlung verfestigbaren Aufbaumaterial gemäß einer ersten Ausführungsform der Erfindung. Die Vorrichtung weist zwei Prozeßkammern 11 und 12 auf, in denen jeweils Objekte hergestellt werden. Dabei kann es sich um zwei voneinander räumlich separierte Prozeßkammern handeln oder aber um eine Doppelkammer, bei der jeder Teilbereich eine eigene Prozeßkammer darstellt. Jede der Prozeßkammern weist einen Baubehälter 6 mit einer Wandung 16 und einer Bauplattform 4 auf.

Die Bauplattform 4 ist mit einem Vertikalantrieb 15 verbunden, welcher eine Auf- und Abbewegung der Bauplattform 4 relativ zu dem Baubehälter in vertikaler Richtung ermöglicht.

Über dem Baubehälter 6 ist eine Materialauftragevorrichtung 7 zum Aufbringen des auf die Bauplattform 4 aufzubringenden Sinterpulvers angeordnet. Oberhalb der Materialauftragevorrichtung 7 ist eine Ablenkeinheit 10 angeordnet, die geeignet ist, einen gerichteten Strahl elektromagnetischer Strahlung, insbesondere Laserstrahlung auf beliebige Orte innerhalb einer aufgetragenen Schicht zu richten. Vorzugsweise handelt es sich bei der Ablenkeinheit 10 um einen xy-Scanner oder einen Plotter.

Wie in Fig. 1 dargestellt, ist eine Strahlungsquelle 21 in Form eines Lasers außerhalb der Prozeßkammern 11 und 12 angeordnet. In einer Abwandlung wird der ausgesandte Laserstrahl über eine Umschalteinrichtung 22 entweder der einen Prozeßkammer 11 oder der anderen Prozeßkammer 12 zugeführt. Die Umschalteinrichtung 22 ist für den Fall, daß es sich bei der Strahlungsquelle 21 um einen Laser mit fasertransmissionsgeeigneten Eigenschaften handelt, z.B. einen NdYAG Laser , als Strahlweiche ausgebildet. Hierzu wird der Strahlweiche der Laserstrahl über eine Lichtleitfaser oder ein Lichtleitkabel zugeführt und über wahlweise mit diesem verbindbare Lichtleitfasern bzw. Lichtleitkabel an die einzelnen Prozeßkammern weitergeleitet. Somit sind die Prozeßkammern über Lichtleitfasern bzw. Lichtleitkabel jeweils fest mit dem Laser verbunden. Die Umschalteinrichtung 22 kann aber auch als schaltbares optisches Element, insbesondere als ein Spiegel ausgebildet sein, wobei der Laserstrahl frei propagiert. Ferner zeigt Fig. 1 ein gebildetes Objekt 24, das von nicht verfestigtem Pulver 25 umgeben ist.

Gemäß der Erfindung ist eine Strahlteilereinrichtung vorgesehen, z.B. in Form eines regelbaren optischen Elements, die es erlaubt, den Strahl aus der Strahlungsquelle zu teilen und gleichzeitig beiden Kammern zuzuführen.

Die Vorrichtung der ersten Ausführungsform gestattet es, eine Strahlungsquelle für zwei verschiedene Prozeßkammern zu nutzen, was mehrere Vorteile für die Herstellung einer großen Stückzahl von Bauelementen mit sich bringt:

Wird nicht jede Prozeßkammer mit einer eigenen Strahlungsquelle versehen, führt dies zu einem deutlich geringeren Investitionsaufwand für die Erhöhung der Anzahl der Prozeßkammern.

Die Entkopplung von Strahlungsquelle und Prozeßkammer gestattet geringere Sicherheitsaufwendungen bei der Ausgestaltung der Prozeßkammer.

Durch die Entkopplung von Strahlungsquelle und Prozeßkammer ist der Platzbedarf für eine Prozeßkammer geringer.

Im Betrieb werden in den beiden Prozeßkammern 11, 12 zeitgleich Objekte hergestellt. Dabei wird der Laser 21 alternierend mit jeder der beiden Prozeßkammern 11, 12 verbunden. Insbesondere wird in der einen Prozeßkammer eine zuvor aufgetragene Schicht belichtet, während zeitgleich in der anderen Prozeßkammer auf eine zuvor selektiv bestrahlte Schicht eine neue Schicht aufgebracht wird und gegebenenfalls für die Bestrahlung vorbereitet wird, z.B. durch Vorheizung.

Das Verfahren gestattet eine gegenüber dem herkömmlichen Verfahren effektivere Nutzung der Strahlungsquelle. Da die Strahlungsquelle jeweils während der Zeit des Schichtauftrags in einem Baubehälter in dem anderen Baubehälter für eine Belichtung benutzt wird, erhöht sich ihr Auslastungsgrad beträchtlich.

### Zweite Ausführungsform, die nicht zu der Erfindung gehört.

Die Vorrichtung gemäß einer zweiten Ausführungsform unterscheidet sich von jener der ersten Ausführungsform darin, daß eine einzige Strahlungsquelle vier Prozeßkammern zugeordnet ist. Diese können entweder in Form von räumlich voneinander getrennten Einzelkammern oder als Teilbereiche von zwei Doppelkammern oder einer Vierfachkammer vorliegen.

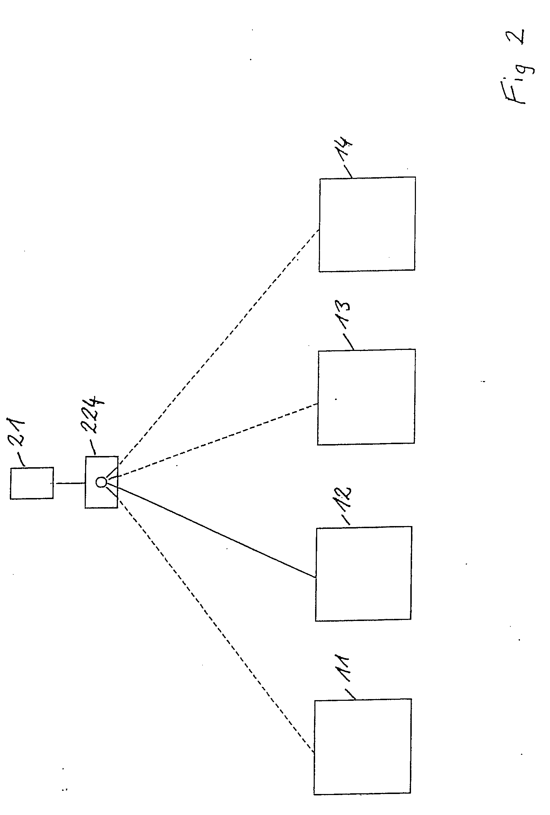

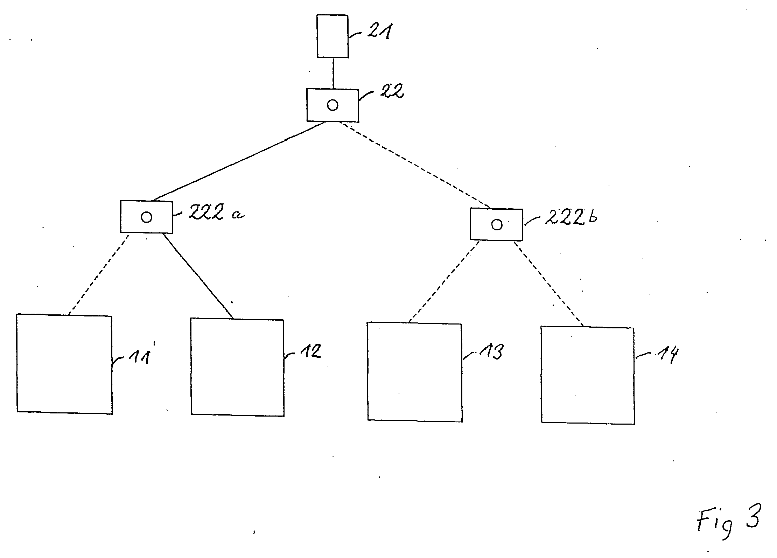

Fig. 2 zeigt schematisch eine Vorrichtung gemäß einer zweiten Ausführungsform der Erfindung. Wie aus Fig. 2 ersichtlich ist, ist der Laser 21 über eine Umschalteinrichtung 224 mit jeweils einer der Prozeßkammern 11, 12, 13, 14 verbindbar. Alternativ dazu kann, wie in Fig. 3 dargestellt, jeweils zwei Prozeßkammern eine Umschalteinrichtung 222a bzw. 222b zugeordnet sein, deren Eingang mit einem Ausgang einer der Strahlungsquelle 21 nachgeschalteten Umschalteinrichtung 22 verbunden ist.

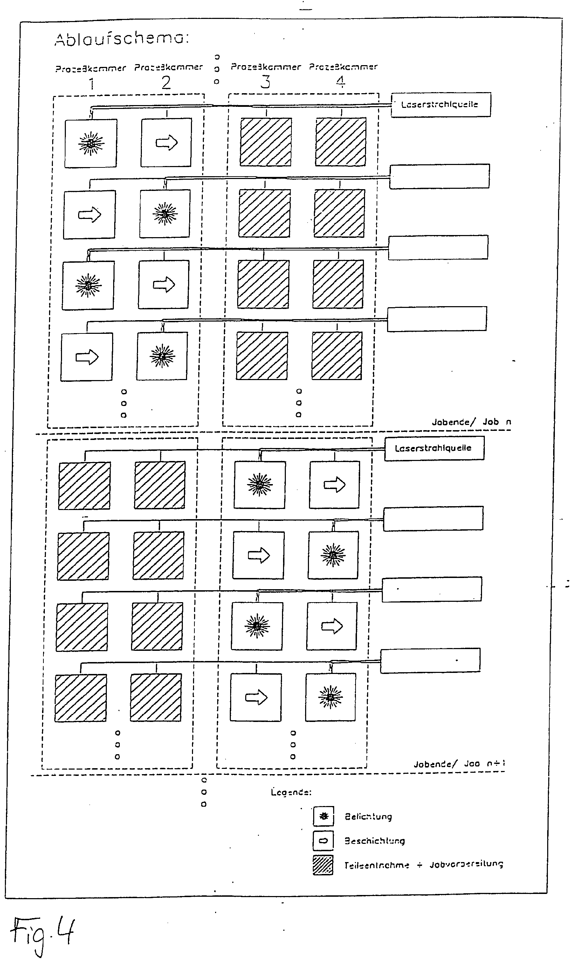

Fig. 4 zeigt ein Ablaufschema eines Verfahrens gemäß einer zweiten Ausführungsform der Erfindung. Wie in der oberen Hälfte von Fig. 4 dargestellt, wird in den Prozeßkammern 11 und 12 zeitgleich ein Bauvorgang durchgeführt. Bei einem Aufbau gemäß Fig. 3 leitet hierzu die Umschalteinrichtung 22 die Strahlung der den Prozeßkammern 11 und 12 zugeordneten Umschalteinrichtung 222a zu. Die Umschalteinrichtung 222a führt dann die Strahlung alternierend jeder der beiden Prozeßkammern 11 und 12 zu. Insbesondere wird in der einen Prozeßkammer eine zuvor aufgetragene bzw. vorbereitete Schicht belichtet, während zeitgleich in der anderen Prozeßkammer auf eine zuvor selektiv belichtete Schicht eine neue Schicht vorbereitet wird. Während des Bauvorgangs in den beiden Prozeßkammern 11 und 12 werden in den beiden anderen Prozeßkammern 13 und 14 fertig gebaute Objekte den Prozeßkammern entnommen und ein neuer Bauvorgang in den Prozeßkammern vorbereitet.

Wie in der unteren Hälfte von Fig. 4 dargestellt, wird nach Beendigung des Bauvorgangs in den Prozeßkammern 11 und 12 ein neuer Bauvorgang in den Prozeßkammern 13 und 14 durchgeführt, während in den beiden Prozeßkammern 11 und 12 fertig gebaute Objekte den Prozeßkammern entnommen werden und ein neuer Bauvorgang vorbereitet wird. Bei einem Aufbau gemäß Fig. 4 leitet hierzu die Umschalteinrichtung 22 die Strahlung der den Prozeßkammern 13 und 14 zugeordneten Umschalteinrichtung 222b zu. Die Umschalteinrichtung 222b führt dann die Strahlung alternierend jeder der beiden Prozeßkammern 13 und 14 zu. Insbesondere wird in der einen Prozeßkammer eine zuvor aufgetragene Schicht belichtet, während zeitgleich in der anderen Prozeßkammer auf eine zuvor selektiv belichtete Schicht eine neue Schicht aufgetragen wird.

Die Umschalteinrichtungen 22, 222a bzw. 222b sind wie bereits bei der ersten Ausführungsform beispielsweise als schaltbare optische Elemente oder als Strahlweichen ausgeführt. Im letzteren Fall besteht dann zwischen der Strahlweiche 22 und dem Laser 21 einerseits und der Strahlweiche 222a bzw. 222b andererseits eine feste Verbindung über eine Lichtleitfaser oder ein Lichtleitkabel.

In einer weiteren Abwandlung sind mehr als vier Prozeßkammern und entsprechend dazu Umschalteinrichtungen vorgesehen.

Die beiden oben beschriebenen Ausführungsformen weisen ferner den Vorteil auf, daß in den unterschiedlichen Prozeßkammern voneinander verschiedene Werkstoffpulver verwendet werden können. Ferner können zwei Chargen unmittelbar nacheinander produziert werden.
Die Erfindung ist bevorzugt anwendbar für das selektive Lasersintern bzw. das selektive Laserschmelzen, bei dem als zu verfestigendes Material ein Pulver verwendet wird. Sie ist aber nicht darauf beschränkt, sondern umfaßt auch die Verwendung eines flüssigen, lichthärtbaren Harzes, wie es aus der Stereolithographie bekannt ist oder die Verfestigung eines Pulvermaterials mittels Einwirkung eines Binders oder Bindersystems. Der Strahl besteht dabei aus Partikeln eines oder mehrerer Komponenten, der die Pulverkörner des Aufbaumaterials miteinander verbindet.

Außer der in den Ausführungsbeispielen beschriebenen Anzahl von Prozeßkammern kann auch jede beliebige Anzahl von Prozeßkammern bzw. Baubereichen oder Kombination der Anzahl der Strahlungsquellen und der zugehörigen Prozeßkammern bzw. Baubereichen vorgesehen sein. In den Prozeßkammern können verschiedene Werkstoffe, Prozeßbedingungen, wie z.B. Temperatur oder Druck oder umgebende Atmosphäre, oder Parameter wie z.B. die Laserleistung verwendet werden.

## Patentansprüche

1. Vorrichtung zum schichtweisen generativen Herstellen von dreidimensionalen Objekten unter Einwirkung von elektromagnetischer oder Teilchenstrahlung an den jeweiligen, dem Querschnitt des Objekts in der jeweiligen Schicht entsprechenden Stellen mit
zwei voneinander getrennten Baubereichen (11, 12) für herzustellende Objekte;
einer Strahlungsquelle (21) zum Abgeben der elektromagnetischen oder der Teilchenstrahlung,
**gekennzeichnet durch**
eine Strahlteilereinrichtung vorgesehen ist, die es erlaubt, den Strahl aus der Strahlungsquelle zu teilen und gleichzeitig den zwei Baubereichen zuzuführen, die in räumlich getrennten Prozeßkammern (11, 12) vorgesehen sind.

2. Vorrichtung nach Anspruch 1, bei der die Strahlteilereinrichtung ein regelbares optisches Element ist.

3. Vorrichtung nach einem der Ansprüche 1 bis 2, **dadurch gekennzeichnet, daß** wenigstens eine Prozeßkammer hermetisch dicht ausgebildet ist.

4. Vorrichtung nach einem der Ansprüche 1 bis 3, **dadurch gekennzeichnet, daß** die Prozeßkammer eine Heiz- oder eine Kühleinrichtung aufweist.

5. Vorrichtung nach einem der Ansprüche 1 bis 4, **dadurch gekennzeichnet, daß** die Strahlungsquelle als Laser ausgebildet ist.

6. Verfahren zum schichtweisen generativen Herstellen von dreidimensionalen Objekten unter Einwirkung elektromagnetischer oder Teilchenstrahlung an den jeweiligen dem Querschnitt des Objekts in der jeweiligen Schicht entsprechenden Stellen
**dadurch gekennzeichnet, daß** die Objekte in zwei räumlich getrennten Prozeßkammern (11, 12, 13, 14) hergestellt werden und
der strahl geteilt wird und den Prozesskammern gleichzeitig zugeführt wird.

## Claims

1. Apparatus for generatively producing three-dimensional objects layer by layer under the action of electromagnetic or particle radiation at the respective locations corresponding to the cross section of the object in the respective layer, comprising two mutually separated constructional regions (11, 12) for objects to be produced;
a radiation source (21) for emitting the electromagnetic or particle radiation,
**characterized in that**
a beam splitter device is provided, which allows the beam from the radiation source to be split and fed simultaneously to the two constructional regions provided in spatially separated process chambers (11, 12).

2. Apparatus according to Claim 1, wherein the beam splitter device is a regulable optical element.

3. Apparatus according to either of Claims 1 and 2, **characterized in that** at least one process chamber is embodied in a hermetically impermeable fashion.

4. Apparatus according to any of Claims 1 to 3, **characterized in that** the process chamber has a heating device or a cooling device.

5. Apparatus according to any of Claims 1 to 4, **characterized in that** the radiation source is embodied as a laser.

6. Method for generatively producing three-dimensional objects layer by layer under the action of electromagnetic or particle radiation at the respective locations corresponding to the cross section of the object in the respective layer,
**characterized in that** the objects are produced in two spatially separated process chambers (11, 12, 13, 14) and
the beam is split and fed simultaneously to the process chambers.

## Revendications

1. Dispositif de fabrication générative couche par couche d'objets tridimensionnels sous l'effet d'un rayonnement électromagnétique ou de particules aux points respectifs correspondant à la section transversale de l'objet dans la couche respective, comprenant
deux zones de construction séparées l'une de l'autre (11, 12) pour des objets à fabriquer ;
une source de rayonnement (21) destinée à émettre le rayonnement électromagnétique ou de particules, **caractérisé en ce qu'**il est prévu un dispositif de séparation de faisceau permettant de séparer le faisceau provenant de la source de rayonnement et de l'acheminer simultanément vers les deux zones de construction qui sont prévues dans des chambres de traitement spatialement séparées (11, 12).

2. Dispositif selon la revendication 1, dans lequel le dispositif de séparation de faisceau est un élément optique pouvant être commandé.

3. Dispositif selon l'une quelconque des revendications 1 à 2, **caractérisé en ce qu'**au moins une chambre de traitement est réalisée de manière hermétiquement scellée.

4. Dispositif selon l'une quelconque des revendications 1 à 3, **caractérisé en ce que** la chambre de traitement comprend un dispositif de chauffage ou de refroidissement.

5. Dispositif selon l'une quelconque des revendications 1 à 4, **caractérisé en ce que** la source de rayonnement est réalisée sous la forme d'un laser.

6. Procédé de fabrication générative couche par couche d'objets tridimensionnels sous l'effet d'un rayonnement électromagnétique ou de particules aux points respectifs correspondant à la section transversale de l'objet dans la couche respective, **caractérisé en ce que** les objets sont fabriqués dans deux chambres de traitement spatialement séparées (11, 12, 13, 14) et **en ce que** le faisceau est séparé et est acheminé simultanément vers les chambres de traitement.
